# EUROPÄISCHE PATENTANMELDUNG

(11) **EP 1 837 546 A1**
(43) Veröffentlichungstag der Anmeldung: **26.09.2007**
(21) Anmeldenummer: 06006050.6
(22) Anmeldetag: 23.03.2006
(51) Int. Cl.: F16D 65/12

(54) **Bremsscheibe**

(71) Anmelder: Hoerbiger Antriebstechnik GmbH, 86956 Schongau (DE)
(72) Erfinder: Kleiner, Stefan, 86977 Burggen (DE)
(74) Vertreter: Schmitz, Hans-Werner

(57) **Zusammenfassung**

Die Erfindung betrifft eine Bremsscheibe (1) mit einem Scheibenkörper (2); mit Bremsflächen (3 bzw. 4) auf den Flachseiten des Scheibenkörpers (2); und mit einer umfangsseitig umlaufenden äußeren Randfläche (5), die zumindest in etwa rechtwinklig zu den Bremsflächen (3 bzw. 4) angeordnet ist, wobei das Material des Scheibenkörpers (2) aus Kaltband besteht; und dass eine (3) der Bremsflächen (3, 4) und die äußere Randfläche (5) über einen abgerundeten, gleichmäßig asymtotisch in die Bremsfläche (3) und die äußere Randfläche (5) übergehenden Eckbereich (7) miteinander verbunden sind.

## Beschreibung

Die Erfindung betrifft eine Bremsscheibe gemäß dem Oberbegriff des Anspruches 1.

Eine gattungsgemäße Bremsscheibe wird bisher aus sogenanntem "Warmband" hergestellt. Um die geometrisch nötigen Eigenschaften und Oberflächenbeschaffenheiten herstellen zu können, muss das Material der Bremsscheibe geschliffen werden. Ferner wird als Einfädelhilfe in den Bremssattel im Eckbereich zwischen zumindest einer der Bremsflächen und der äußeren Randfläche eine Fase eingeschliffen, so dass die gattungsgemäße Bremsscheibe durch diesen zusätzlichen Bearbeitungsschritt im Zusammenhang mit der Notwendigkeit des Schleifens der Bremsflächen zur Erreichung einer ausreichenden Parallelität und Rauhigkeit aufwendig herzustellen ist.

Es ist daher Aufgabe der vorliegenden Erfindung, eine Bremsscheibe der im Oberbegriff des Anspruches 1 angegebenen Art zu schaffen, die einfacher und damit kostengünstiger herstellbar ist und dennoch die Anforderungen an eine ausreichende Parallelität und Rauhigkeit der Bremsflächen zusammen mit dem Vorsehen einer Einfädelhilfe erfüllt.

Die Lösung dieser Aufgabe erfolgt durch die Merkmale des Anspruchs 1.

Dadurch, dass das Material des Scheibenkörpers aus Kaltband besteht, das bereits die erforderlichen geometrischen Eigenschaften und Oberflächenbeschaffenheiten aufweist, kann die erfindungsgemäße Bremsscheibe durch Stanzen (Feinschneiden) hergestellt werden, ohne dass eine schleifende Bearbeitung erforderlich wird.

Hierbei kann durch Ausnutzung des Stanzeinzuges als Einfädelhilfe ein abgerundeter gleichmäßiger asymtotisch in die Bremsfläche und die äußere Randfläche übergehender Eckbereich verwendet werden, über den eine der Bremsflächen mit der äußeren Randfläche verbunden ist.

Der Unteranspruch hat eine vorteilhafte Weiterbildung der Erfindung zum Inhalt.

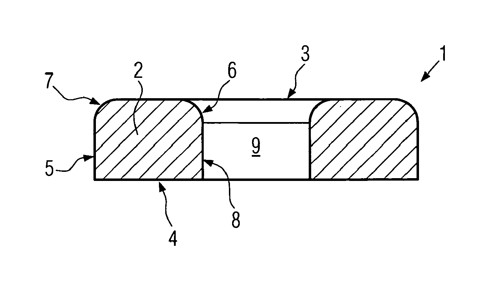

Weitere Einzelheiten, Vorteile und Merkmale der vorliegenden Erfindung ergeben sich aus nachfolgender Beschreibung eines Ausführungsbeispiels anhand der beigefügten Zeichnung.

Die einzige Figur der Zeichnung zeigt eine schematisch vereinfachte geschnittene Darstellung einer erfindungsgemäßen Bremsscheibe 1. Die Bremsscheibe 1 weist einen Scheibenkörper 2 auf, der aus Kaltband durch Stanzen hergestellt ist. Der Scheibenkörper 2 ist mit zwei parallelen Bremsflächen 3 bzw. 4 auf den Flachseiten des Scheibenkörpers 2 versehen.

Ferner ist eine äußere umfangsseitig umlaufende Randfläche 5 vorgesehen, die zumindest in etwa rechtwinklig (vorzugsweise genau rechtwinklig) mit unter Umständen kleineren Formabweichungen von etwa ± 1° angeordnet ist.

Wie die Figur verdeutlicht, ist im Beispielsfalle die Bremsfläche 3 über einen äußeren abgerundeten gleichmäßig asymtotisch sowohl in die Bremsfläche 3 als auch die äußere Randfläche 5 übergehenden Eckbereich 7 mit dem äußeren Randbereich 5 verbunden. Dieser abgerundete gleichmäßig asymtotisch in die Bremsfläche bzw. in die äußere Randfläche 5 verlaufende Eckbereich 7 kann im Wege des Herstellens des Scheibenkörpers 2 durch Stanzen bzw. Feinschneiden durch den Stanzeinzug erzeugt werden.

Wie die Figur ferner verdeutlicht, ist ein weiterer Eckbereich 6 vorgesehen, der bei der in der Figur dargestellten, besonders bevorzugten Ausführungsform ebenfalls abgerundet ist und gleichmäßig asymtotisch in die Bremsfläche 3 und eine innere Randfläche 8 des Scheibenkörpers 2 übergeht. Diese innere Randfläche 8 ist die Begrenzungsfläche für eine Innenausnehmung 9 des Scheibenkörpers 2 der Bremsscheibe 1.

Der innere Eckbereich 6 ist, wie gesagt, bei der in der Figur dargestellten, besonders bevorzugten Ausführungsform ebenfalls abgerundet und gleichmäßig asymtotisch verlaufend ausgebildet. Das Vorsehen dieses inneren abgerundeten Eckbereichs 6 ist jedoch nicht zwingend.

### Bezugszeichenliste

- 1: Bremsscheibe
- 2: Scheibenkörper
- 3: Bremsflächen
- 4: Bremsflächen
- 5: Äußere Randfläche
- 6: Innerer Eckbereich
- 7: Äußerer Eckbereich
- 8: Innere Randfläche
- 9: Mittige Ausnehmung des Scheibenkörpers 2

## Patentansprüche

1. Bremsscheibe (1)
- mit einem Scheibenkörper (2);
- mit Bremsflächen (3 bzw. 4) auf den Flachseiten des Scheibenkörpers (2); und
- mit einer umfangsseitig umlaufenden äußeren Randfläche (5), die zumindest in etwa rechtwinklig zu den Bremsflächen (3 bzw. 4) angeordnet ist,
**dadurch gekennzeichnet,**
- **dass** das Material des Scheibenkörpers (2) aus Kaltband besteht; und
- **dass** eine (3) der Bremsflächen (3, 4) und die äußere Randfläche (5) über einen abgerundeten, gleichmäßig asymtotisch in die Bremsfläche (3) und die äußere Randfläche (5) übergehenden Eckbereich (7) miteinander verbunden sind.

2. Bremsscheibe nach Anspruch 1, **dadurch gekennzeichnet, dass** eine innere Randfläche (8) vorgesehen ist, die zumindest in etwa rechtwinklig zu den Bremsflächen (3, 4) angeordnet ist und die über einen inneren abgerundeten gleichmäßig asymtotisch in die Bremsfläche (3) und die innere Randfläche (8) übergehenden Eckbereich (6) mit der einen Bremsfläche (3) verbunden ist.
